# EUROPEAN PATENT SPECIFICATION

(11) **EP 0 426 326 B1**
(45) Date of publication and mention of the grant of the patent: **17.09.1997**
(21) Application number: 90311353.8
(22) Date of filing: 17.10.1990
(51) Int. Cl.: G11B 5/31

(54) **Magnetic read/write head and method of making such a head**
Magnetischer Lese-/Schreibkopf und Herstellungsverfahren eines solchen Kopfes
Tête magnétique de lecture/écriture et procédé de fabrication d'une telle tête

(30) Priority: 20.10.1989 US 425735
(43) Date of publication of application: 08.05.1991
(73) Proprietor: SEAGATE TECHNOLOGY INTERNATIONAL, Georgetown, Grand Cayman Island (KY)
(72) Inventor: Liao, Simon Huangchung, Edina Minnesota 55435 (US)
(74) Representative: Sturt, Clifford Mark

(56) References cited:
- EP-A- 0 114 076
- EP-A- 0 303 324
- DATABASE WPIL Section Ch, Week 8727, Derwent Publications Ltd., London, GB; Class L03, AN 87-189837
- DATABASE WPIL Section Ch, Week 8340, Derwent Publications Ltd., London, GB; Class L03, AN 83-780003
- DATABASE WPIL Section Ch, Week 8244, Derwent Publications Ltd., London, GB; Class L03, AN 82-93907E
- DATABASE WPIL Section Ch, Week 8137, Derwent Publications Ltd., London, GB; Class L03, AN 81-67042D
- JOURNAL OF APPLIED PHYSICS. vol. 67, no. 9, 1 May 1990, NEW YORK US pages 5123 - 5125 H. MATSUYAMA ET AL. 'The high-resistive soft magnetic amprphous films consisting of cobalt, iron, boron, silicon, and oxygen, utilized for video head devices'

## Description

The present invention relates to a magnetic read/write head and to a method of making such a head.

Thin film magnetic read/write heads are used for magnetically reading and writing information on a magnetic storage medium, such as a magnetic disk or magnetic tape. As data storage requirements have risen, it has become increasingly desirable to provide high levels of information storage density on the magnetic storage medium. Increased storage densities require magnetic read/write heads which provide a strong writing field in relation to the applied writing current. This may be achieved by making the anisotropy field (Hₖ) as small as possible thereby increasing the permeability (µ). Increased permeability (µ) also results in increased sensitivity when information is read from the magnetic storage medium. Smaller coercivity (H_{c}) in a read/write magnetic head is also desirable. Small coercivity (H_{c}) causes the domain pattern in the poles and yoke of the thin film head to become more stable thereby minimising the effects of Barkhausen noise.

EP-A-0303324 discloses a magnetic material CoₐFe_{b}B_{c} wherein 0.50 < a < 0.97; 0.01 < b < 0.20; 0.02 < c < 0.1, for use in magnetic heads, which is manufactured by use of sputtering techniques. However, as a result of the particular composition and its method of manufacture, the magnetic material disclosed in EP-A-0303324 has a permeability of only about 2000 while the coercivity (H_{c}) and the anisotropy field (Hₖ) are not lower than about 24 oersteds.

Yamada et al (J. Appl. Phys. 55(6), 1984, 2235-7) have reported a thin film head for high density magnetic recording using CoZr amorphous films produced by rf magnetron sputtering methods. Such thin film heads (Cr₉₀ Zr₁₀) have coercitivity (Hc) of ≤ 0.05 oersteds, an anisotropy field (Hk) of 2 oersteds, a permeability of 3500 (at 10 MHz) and a saturation magnetisation (4 π Ms) of 14 K gauss.

EP-A-0247868 discloses a magnetic head having Fe as its main component including one or more elements at 5 to 20% selected from B, N, C and P, i.e. elements interstitially soluble in Fe. The magnetic film is formed by the use of sputtering methods and has a relative permeability of not less than 1000 and a saturation magnetisation of at least 15 K gauss.

U.S. patent no. 4,661,216 relates to a cobalt-nickel-iron electro-plating composition bath used to produce a thin film head having a saturation magnetisation (4π Mₛ) of about 19 K gauss, a coercivity (H_{c}) of about 2 oersteds, an anisotropy field (Hₖ) of about 13 oersteds and a permeability (µ) of about 1500.

It would be advantageous to produce a thin film magnetic head having a yet smaller anisotropic field (Hₖ) and coercivity (H_{c}), while maintaining a large saturated magnetisation (Mₛ or 4πMₛ), and increasing the permeability (µ).

According to a first aspect of the present invention, there is provided a magnetic read/write head comprising a substrate, a thin film magnetic core of a metal alloy supported by the substrate, the magnetic core including a read/write gap for reading and writing information, and a coil within the magnetic core, characterised in that the metal alloy includes boron.

According to a second aspect of the present invention, there is provided a method of forming a magnetic read/write head characterised by depositing layers of a magnetic metal alloy, which includes boron, on a substrate to form a thin film magnetic core.

In its preferred form, the invention features a magnetic read/write head having a core comprising cobalt-iron with the boron in the alloy. This core may be deposited by means of electro-deposition techniques. The anisotropy field (Hₖ) may be reduced if an alternating magnetic field is applied to the core during the electro-plating process. Alternatively, the core may be subjected to a rotating magnetic field during annealing to lower the anisotropy field (Hₖ).

The thin film magnetic head described below has a reduced coercivity H_{c} and an anisotropy field Hₖ while maintaining a large saturation magnetisation Mₛ or 4πMₛ. It also has an increased permeability µ. More especially, the cobalt-iron-boron core of the thin film magnetic head described below has a saturation magnetisation 4πMₛ of about 19 K gauss, a coercivity H_{c} of about 1.0 Oersteds, an anisotropy field Hₖ of about 7 Oersteds and a permeability µ of about 2500.

The invention is described further, by way of example, with reference to the accompanying drawings, in which:
Figure 1 is a diagrammatic perspective view of a bar magnet;
Figure 2 is a graph of magnetisation versus applied magnetic field in the direction of the easy axis of a magnetic material;
Figure 3 is a graph of magnetisation versus applied magnetic field in the direction of the hard axis of a magnetic material;
Figure 4 is a diagrammatic perspective view of a thin film magnetic read/write head;
Figure 5 is a plan view of the thin film magnetic read/write head of Figure 4 showing a magnetic domain pattern;
Figure 6 is a cross sectional view of the thin film magnetic read/write head of Figure 4; and
Figures 7 to 12 are cross sectional views corresponding to Figure 6 at different stages during the production of the thin film magnetic read/write head.

The present invention provides a thin film magnetic head having magnetic characteristics offering improved performance. The magnetic head of the present invention is formed with a metal alloy comprising cobalt, iron and boron to improve head performance.

A cursory review of magnetism is given first to explain the performance characteristics of a thin film read/write head, together with the meaning and significance of terms such as easy and hard axis, anisotropy field (Hₖ), permeability (µ), coercivity (H_{c}) and saturation magnetisation (4πMₛ).

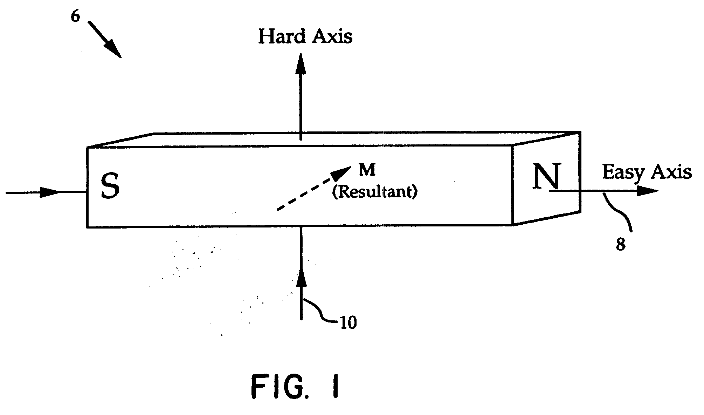

A bar magnet 6 is shown in Figure 1 and has an easy axis indicated by an arrow 8 and a hard axis indicated by an arrow 10. The expression easy axis refers to the preferred direction of the magnetisation vector (M) within a magnetic material in a relaxed state. In a magnet, the easy axis is parallel with the axis of the poles. The hard axis, on the other hand, refers to a direction perpendicular to the easy axis, as shown in Figure 1 by the arrow 10. When a magnetising field H is applied to a magnetic material, the magnetisation vector M of the material tends to deflect in the direction of the applied field H. By applying a sufficiently large magnetisation field H in a direction other than the direction of the magnetic material's easy axis, the material's magnetisation vector M is deflected away from its preferred direction in the relaxed state, parallel to the easy axis. The deflected magnetisation vector M is shown as M (Resultant) in Figure 1.

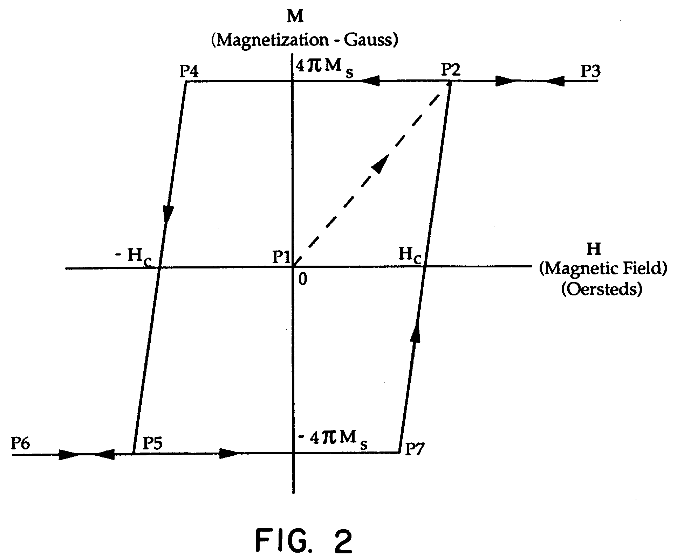

When an alternating magnetic field H is applied to a magnetic along that material's easy axis, a graph of magnetisation M versus applied magnetic field H forms a hysteresis loop as shown in Figure 2. The magnetisation M is shown as 4πM in units of gauss. H, the applied magnetic field, is shown in units of Oersteds.

Starting from the point labelled P1 in Figure 2, as a magnetic field H (in the easy axis direction) is applied to the magnetic material, the magnetisation M follows the dashed line to the point labelled P2 in Figure 2. Once the material reaches the point P2 in Figure 2, the material is saturated and any additional magnetic field H applied to the material results in no further increase in the material's magnetisation. Further increase of the applied magnetic field H moves the plot to the point labelled P3 in Figure 2. This saturation magnetisation value is 4πMₛ as shown in Figure 2.

As the level of the applied magnetic field H is decreased and the direction of its vector is reversed, the hysteresis graph for the material follows the path from the point P3 through P2 and to the point labelled P4 in Figure 2. The material's magnetisation does not change from its saturated value of 4πMₛ. A further increase of the applied magnetic field H in the reverse direction causes the magnetisation M within the magnetic field to begin to decrease following the path from the point P4 to the point labelled P5 passing through the point labelled -H_{c} on the hysteresis loop shown in Figure 2. Once the point P5 in Figure 2 is reached, further increase of the magnetic field H (in the reverse direction) results in no further increase in the magnetisation of the material and the material is once again saturated at the value shown as -4πMₛ in Figure 2. Further increase in the strength of the applied magnetic field H moves the plot from the point P5 to the point labelled P6 in Figure 2.

As the applied magnetic field H is increased from its value at the point P6 through zero, the hysteresis graph follows the path through the point P5 to the point labelled P7 in Figure 2 and the magnetisation of the material does not change from its saturated value of -4πMₛ. Additional increase of the magnetic field H causes the material's magnetisation to follow the path from the point P7 to the point P2 through H_{c} on the hysteresis loop. By continuing to vary the applied magnetic field H, the material may be made to repeatedly follow the hysteresis path of Figure 2.

The points labelled H_{c} and -H_{c} represent the coercive force, or coercivity of the magnetic material. The area of the hysteresis loop corresponds to the energy loss during one hysteresis cycle. Hysteresis loss is the energy lost in the form of heat in overcoming the friction encountered during domain wall motion and domain rotation. In magnetic read/write heads, it is desirable to have a large saturation magnetisation and a small coercivity H_{c} such that the shape of the hysteresis loop is generally tall and thin.

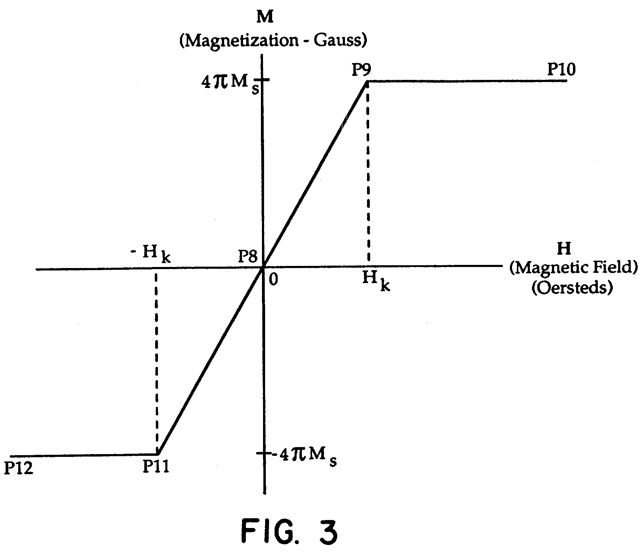

Figure 3 shows a further graph of magnetisation M of a material measured in gauss versus applied magnetic field H. In Figure 3, the vector H has been applied in a direction parallel to the hard axis and perpendicular to the easy axis of the magnetic material. Unlike the graph of Figure 2, there is no hysteresis loop in the graph of magnetisation M versus applied magnetic field H along the hard axis. As in the graph of Figure 2, in Figure 3, H is the applied magnetic field and 4πM is the resultant magnetisation vector within the magnetic material. With no applied magnetic field H, the magnetisation along the hard axis direction is zero. As the value of H is increased in the direction parallel with the hard axis, the plot of magnetisation follows the line from the point labelled P8 to the point labelled P9 in Figure 3. At the point P9, a maximum magnetisation value 4πMₛ has been reached for the material and the material is saturated having a magnetisation equal to 4πMₛ. Further increase in the applied magnetic field H results in no further increase in the magnetisation of the material beyond the value 4πMₛ, and the plot continues to the point labelled P10.

As the applied magnetic field H is reduced through zero and made increasingly negative, the magnetisation M of the material decreases from its value at the points P9 and P10 of 4πMₛ through zero at the point P₈ and ultimately reaches saturation again with a value of -4πMₛ at the point labelled P11 in Figure 3. Further increase in the applied magnetic field (in the reverse direction) beyond the level necessary to reach the point P11 results in no corresponding increase in the material's magnetisation M and the plot moves to the point labelled P12 in Figure 3.

The value of applied magnetic field H along the hard axis necessary to place the magnetic material in saturation is known as the anisotropic field and is labelled Hₖ. The permeability of the material, µ, may be expressed as:$\text{µ ≡} \frac{\text{B}}{\text{H}} \text{=} \frac{\text{4πM+H}}{\text{H}} \text{=} \frac{\text{4πM}}{\text{H}} \text{+ 1 ≈} \frac{{\text{4πM}}_{\text{s}}}{{\text{H}}_{\text{k}}}$ where Mₛ is the saturated magnetisation value for the material and Hₖ is the anisotropy of the material. The final approximation in Equation (1) may be made because the factor 4πM / H is much greater than one. Thus the slope of the graph of Figure 3 is approximately equal to the permeability µ of the magnetic material. The larger that the permeability µ is for the material, the smaller the applied magnetic field H must be to achieve the same magnetisation 4πM. Figure 3 graphically shows that as Hₖ is decreased the permeability µ for the material will increase as the slope of the curve in Figure 3 increases.

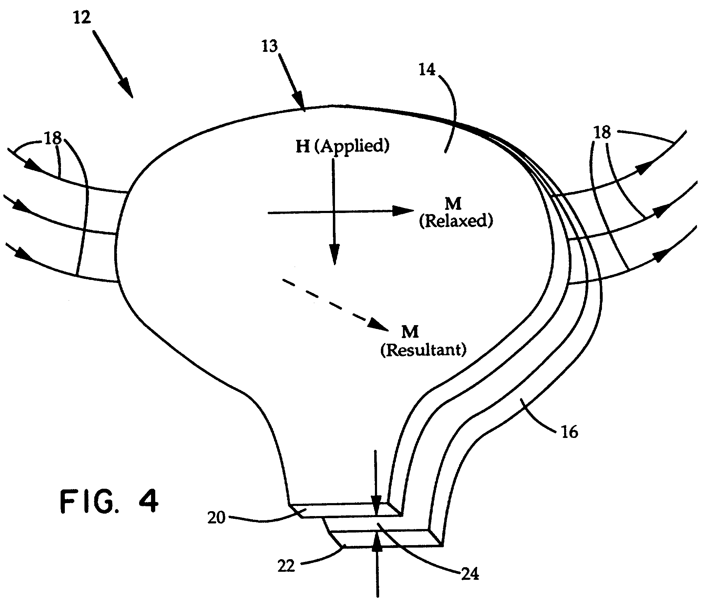

Figure 4 shows a thin film head 12 comprising a core 13 including an upper pole piece 14 and a lower pole piece 16. Conductors 18 extend through the thin film head 12 and are sandwiched between the upper pole piece 14 and the lower pole piece 16. The upper pole piece 14 includes an upper pole tip 20 while the lower pole piece 16 includes a lower pole tip 22. A gap 24 is shown as formed between the upper pole tip 20 and the lower pole tip 22. Typically, alumina fills the gap. A magnetic storage medium (not shown) may be placed near the gap 24 such that information may be written on or read from the medium.

Also shown in Figure 4 is an arrow labelled H (Applied) indicating the direction of the applied magnetic field H and an arrow labelled M (Relaxed) indicating the magnetisation M of the thin film head 12 in its relaxed state. In operation, a magnetic storage medium such as a magnetic disk or a magnetic tape moves in the region near the gap 24 formed between the upper pole tip 20 and the lower pole tip 22. As electrical current is caused to flow in the conductors 18 in the direction indicated, a magnetic field H will be applied to the thin film head 12 in the direction shown by the arrow labelled H (Applied) in Figure 4. This applied magnetic field causes the magnetisation M of the material to change direction from the direction indicated by the arrow labelled M (Relaxed) to the direction indicated by the arrow formed by the dashed line labelled M (Resultant). As the dashed line labelled M (Resultant) is deflected away from the easy axis in a direction towards the gap 24 formed between the upper pole tip 20 and the lower pole tip 22 due to the applied magnetic field H from the electrical current passing through the conductors 18, the upper pole tip 20 will become an increasingly strong north pole while the lower pole tip 22 becomes a south pole. This causes a fringe field to form around the gap 24 with a magnetic field vector having a direction from the upper pole tip 20 to the lower pole tip 22.

In a similar manner, if the current through the conductors 18 were reversed from the direction indicated in Figure 4, the upper pole tip 20 would become a south pole while the lower pole tip 22 would become a north pole. This would cause a fringe field around the gap 24 with a magnetic field in a direction from the lower pole tip 22 to the upper pole tip 20. Thus, it is possible by modulating the flow of the electrical current through the conductors 18 to modulate the magnetisation of the upper pole tip 20 and the lower pole tip 22. The gap 24 between the upper pole tip 20 and the lower pole tip 22 causes a fringe field to extend beyond the region of the gap 24. When a magnetic storage medium such as a magnetic disk or a magnetic tape is placed in this fringe field, information may be recorded by impressing a magnetic field upon the medium through the fringe field associated with the thin film head 12. Similarly, magnetisation patterns impressed upon a storage medium passing through the fringe field region of thin film head 12 cause an electrical current to flow through conductors 18 such that the stored information may be recovered.

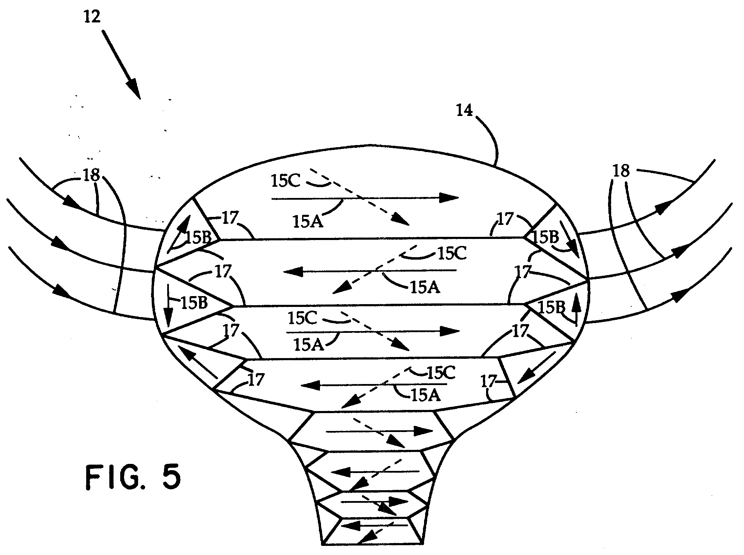

Figure 5 shows the thin film head 12 of Figure 4 including arrows 15A, 15B and 15C indicating the direction of the magnetisation vectors M in the magnetic domains across the upper pole piece 14. Solid arrows 15A in Figure 5 indicate the direction of a magnetic domain's easy axis. Lines 17 in Figure 5 separating two adjacent magnetic domains indicate the domain walls. The solid arrows 15A indicate the direction of the magnetisation vector M in the relaxed state of the thin film head 12 along its easy axis. Small vertical arrows 15B along the edge of the upper pole piece 14 shown in Figure 5 indicate the magnetisation vector in the closure domains. Closure domains complete the magnetic circuit between adjacent opposing domains. As electrical current is caused to flow through the conductors 18 in the direction indicated, the direction of the magnetisation vector M of the domains in the upper pole piece 14 are deflected away from the easy axis as indicated by the arrows 15C formed by the dashed lines. It is this deflection that causes north and south poles to form at the upper pole tip 20 and the lower pole tip 22, respectively. If the anisotropic field Hₖ is made small, thereby increasing the permeability µ for the thin film head 12, the required strength of the applied magnetic field H will be lower to achieve the same amount of deflection of the material's magnetisation M and a smaller electrical current applied through the conductors 18 is required.

By decreasing the value of the coercivity H_{c}, domain wall jumping is reduced in the thin film head 12, minimising the resultant Barkhausen noise. With small values for the coercivity H_{c}, there is little hysteresis that can affect the magnetisation rest state. This promotes the lowest energy condition after removal of any applied magnetic fields.

It is also desirable to have a magnetic head with a large saturation magnetisation value Mₛ, such that it is possible to apply more powerful magnetic fields to the magnetic storage medium through the fringe field region. A thin film head having a large permeability µ (which is proportional to Mₛ, see Equation (1) above) will also have increased sensitivity when information is read back from the magnetic storage medium. Increased sensitivity causes even weak changes in the magnetisation of the magnetic storage medium passing through the fringe field region of the thin film head 12 to produce relatively large changes in the electrical current flowing through the conductors 18.

With the present invention, thin film read/write heads are produced having large saturation magnetisation Mₛ, low coercivity H_{c}, low anisotropy Hₖ and large permeability µ.

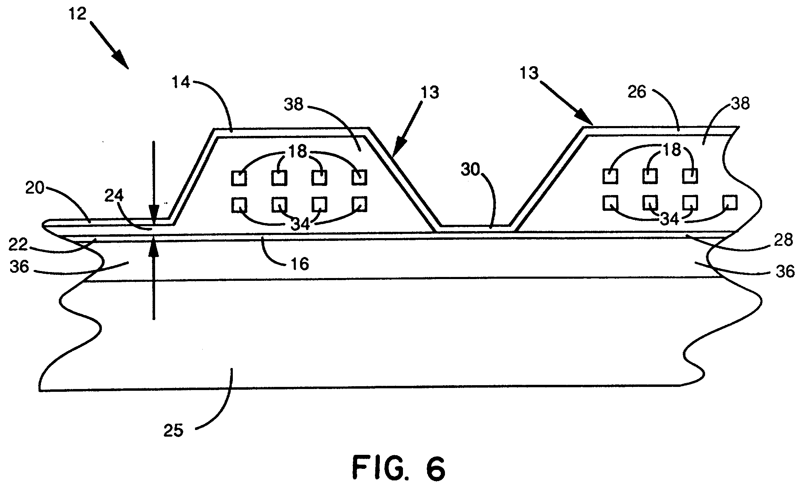

Figure 6 shows a cross sectional view of the thin film magnetic head 12 of Figures 4 and 5. The thin film head 12 includes a base or "flyer" substrate 25 and the pole pieces or core 13. The flyer substrate 25 may comprise, for example, ALSIMAG material. The core 13 comprises the upper pole piece 14 and the lower pole piece 16. The upper pole piece and lower pole piece 14 and 16 form the upper pole tip 20 and the lower pole tip 22 between which the gap 24 is formed. The core 13 also includes a rear upper portion 26 and a rear lower portion 28. The upper pole piece and lower pole piece 14 and 16 and rear upper and lower portions 26 and 28 of the core 13 meet at a centre area or "via" 30 (not shown in Figures 4 and 5).

The thin film head 12 of Figure 6 uses two core windings formed by conductors 18 and 34. Although only the conductors 18 are shown in Figures 4 and 5, the conductors 18 and 34 are formed in a coil around the via 30 of the core 13 with a portion of the wrapping being sandwiched between the upper pole piece and lower pole piece 14 and 16 of the core 13 and a portion of the wrapping sandwiched between the rear upper and lower portions 26 and 28 of the core 13. The core 13 is separated from the substrate 25 by a base coat 36. Typically, the base coat 36 is an insulator such as alumina, Al₂O₃. The area between the upper pole piece and lower pole piece 14 and 16 is filled with an insulating material 38. Typically, the insulating material 38 is photo-resist. The gap 24 between the upper pole tip 20 and the lower pole tip 22 is filled with alumina, Al₂O₃. The insulating material 38 is also sandwiched between the rear upper and lower portions 26 and 28 of the core 13.

During fabrication, multiple heads similar to the thin film head 12 may be deposited across the entire surface of the base substrate 25. After the layers of the thin film head 12 are deposited as shown in Figure 6, the base substrate 25 (upon which the head 12 is formed) is "diced" or sliced into many individual thin film heads, each carried by a portion of the base substrate 25, such that the upper and lower pole tips 20 and 22 and the gap 24 are exposed. The gap 24 and pole tips 20 and 22 may then be lapped in a direction generally inward, towards the centre of the thin film head 12, to the desired throat dimensions. The lapping process is a grinding process in which the exposed portion of the gap 24 is applied to a diamond slurry. Electrical contacts (not shown) are applied to the conductors 18 and 24 of the thin film head 12. The completed head may then be attached to some type of carrying fixture (not shown) for use in reading and writing data on a magnetic storage medium such as a computer disk.

In operation, the magnetic storage medium is placed near the upper and lower pole tips 20 and 22 which form the gap 24. During the reading operation, the changing magnetic field due to the moving storage medium impresses a magnetic field upon the upper and lower pole tips 20 and 22 formed by the upper pole pieces and lower pole pieces 14 and 16 of the core 13. This impressed field is carried around the conductors 18 and 34 through the upper pole piece 14, the via 30 and the lower pole piece 16 of the core 13. This causes an electrical current to be induced in the conductors 18 and 34. This electrical current is representative of the magnetic field produced by the moving magnetic storage medium. During the write operation, an electrical current is caused to flow in the conductor 18 or the conductor 34. This results in a magnetic field in the core 13 which is applied to the storage medium (not shown) due to the fringing effect at the gap 24 formed between the upper and lower pole tips 20 and 22 of the core 13.

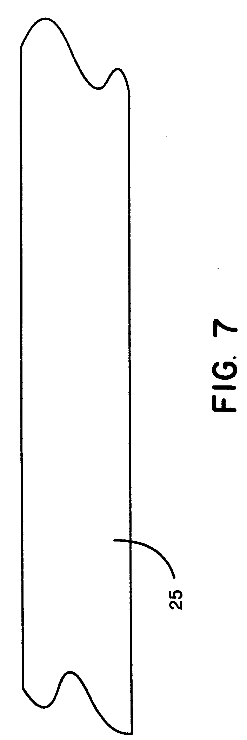

The steps used in fabricating the thin film magnetic head 12 of Figures 4, 5 and 6 are shown individually in Figures 7 to 12. In the cross sectional view of Figure 7, the base substrate 25 is shown. The base substrate 25 is typically large relative to the dimensions of the thin film magnetic heads and is referred to as a "wafer". During the manufacturing process, many thin film heads such as the thin film head 12 typically are fabricated upon the base substrate 25. For this example, however, only the fabrication of a single thin film magnetic head 12 is shown. Typically, the base substrate 25 is made of an electrically conductive material, such as ALSIMAG.

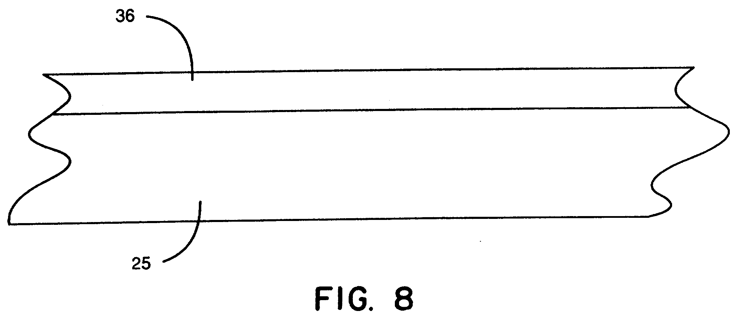

A layer providing the base coat 36 is deposited across the entire base substrate 25 as shown in Figure 8. The base coat 36 is a non-conductive material, typically comprising alumina, Al₂O₃. The base coat 36 may be applied using sputtering techniques.

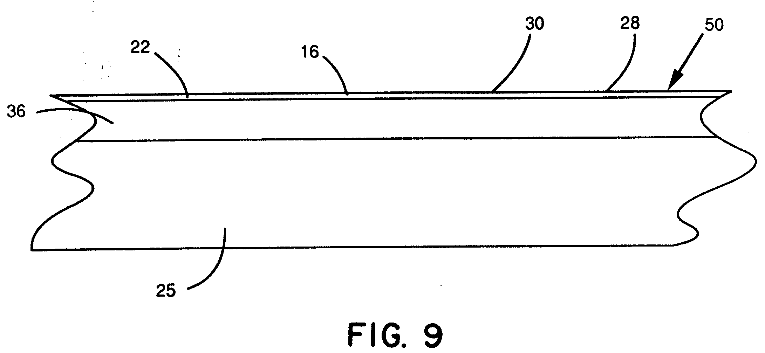

As shown in Figure 9, a thin film layer 50 of magnetic material is applied across the surface using electro-deposition techniques. This process is described below in more detail. The layer 50 forms the lower pole piece 16 and the lower rear portion 28 of the core 13, as well as the lower pole tip 22 and part of the via 30. The layer 50 comprises a portion of the CoFeB core of the present invention.

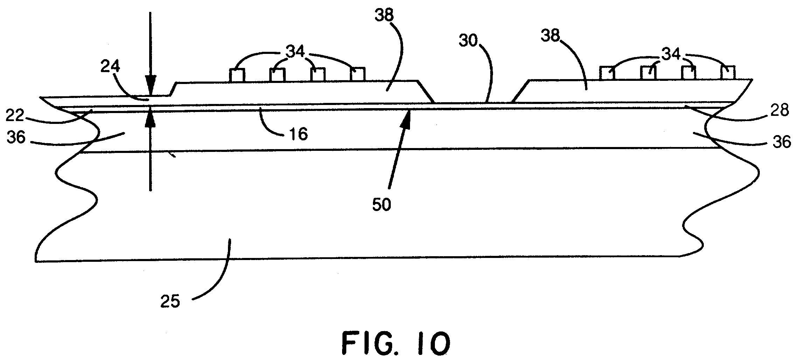

Using photo-lithographic techniques, the insulating layer 38 is deposited upon the layer 50 of the core 13 in the shape shown in Figure 10. Alumina, Al₂O₃ is deposited in the gap 24. The conductors 34 are deposited upon the insulating layer 38 and formed in a coiled shape.

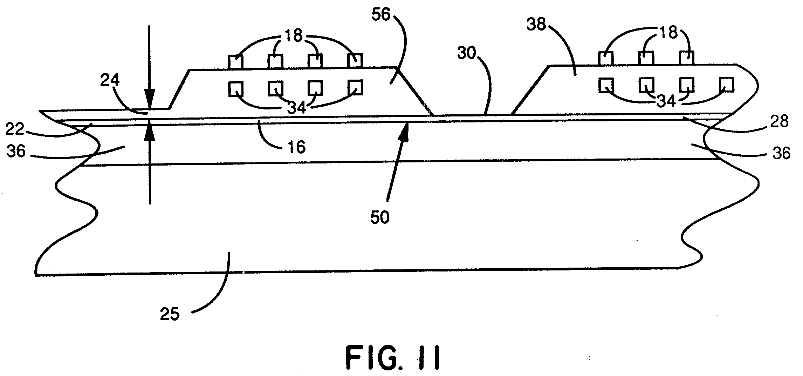

In Figure 11, the insulating layer 38 has been built up slightly using photo-lithographic masking and etching techniques. The conductors 18 are deposited similarly to the conductors 34, and formed in a coiled shape.

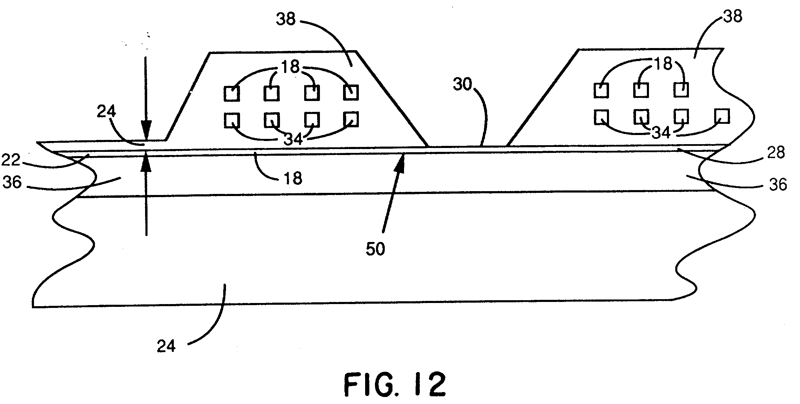

In Figure 12, the insulating layer 38 has been built up again and covers the conductors 18 and 34. Next, another layer of magnetic material is deposited over the structure shown in Figure 12 to form the upper pole piece 14, the rear upper portion 26 and a portion of the via 30 as shown in Figure 6. This layer is deposited using electro-deposition techniques and comprises CoFeB.

The upper pole piece 14 and the lower pole piece 16 are deposited upon the substrate 25 through electroplating. By applying an alternating magnetic field during this electro-deposition step, the anisotropic field Hₖ may be reduced. Alternatively, following the deposition step for forming the core of Figure 6 the core may be annealed in a rotating field to lower the anisotropic field Hₖ. The electro-plating bath used in the present invention to deposit the pole pieces 14 and 16 comprises a solution of cobalt, iron and boron. The addition of the boron reduces the coercivity H_{c} of the pole pieces. For thicker films forming the upper pole piece 14 and the lower pole piece 16, this reduction of coercivity H_{c} is even greater. The addition of the boron has little effect on magnetisation saturation flux density, which remains about 19 K gauss. The addition of the boron along with a rotating magnetic field applied during the electro-deposition step or the use of rotating magnetic field annealing reduces the coercivity H_{c} of the pole pieces of thin film head 12. In a preferred embodiment, the concentration of boron in the electro-plating bath varies from about 0.1% to about 2.0% by weight. Iron concentration may vary from about 7.0% to about 12.0% by weight with the balance of the electro-plating bath being cobalt. One suitable electroplating bath for forming the thin film magnetic read/write head of the present invention is:

**Table 1**

| Composition | Amount |
|---|---|
| CoSo₄7H₂O | 50 to 300 grammes/litre |
| FeSo₄6H₂O | 3 to 15 grammes/litre |
| H₃BO₃ | 5 to 50 grammes/litre |
| Sodium saccharin dihydrate | 0.5 to 4 grammes/litre |
| Dodecyl sodium sulphate | 0.1 to 3 grammes/litre |
| DMAB | 1 to 10 drops/litre of 2 grammes/50 ml dissolved DMAB |
| Sodium citrate | 0.5 to 10 grammes/litre |

DMAB (dimethyl amine borane) acts as a reducing agent and provides the dis-associated boron used for deposition of the CoFeB thin film core. The disassociated cobalt ion may range from 5 to 100 grammes/litre in the electro-plating bath. The iron ion may range from 0.2 to 5.0 grammes/litre in the electroplating bath. A suitable temperature during electroplating is about 30.C. A suitable pH for the electroplating bath is about 3.5. The ratio between cobalt, iron and boron in the electro-plating bath will remain approximately the same in the electro-plated film.

Pulse electro-plating may be used during the deposition of the cobalt-iron-boron core using 6 ampere pulses with a 10 mS on time and a 90 mS off time. Pulse electro-plating helps maintain the magnetic characteristics of the cobalt-iron-boron core as the core's thickness grows beyond about 0.5 microns, preventing the core from becoming isotropic and losing its hysteresis loop. The thin film exhibits useful magnetic characteristics for thickness between about 500 Å and about 10 microns, preferably ranging between about 2000Å and about 3 microns.

It has been discovered that the anisotropy field Hₖ of the core may be lowered by two alternative methods. During the electro-deposition of the upper and lower pole pieces 14 and 16, a rotating magnetic field may be applied. This field should alternate between the normal axis of the core and 90° off the normal axis. Applying the normal field for 40 seconds of a one minute cycle and the 90° field for the remaining 20 seconds of the one minute cycle provides a suitable ratio between the two field positions. Alternatively, this rotating field may be applied during an annealing step in which the core material is subjected to heat.

Table 2 shows a comparison between a nickel-iron core (using 82% nickel in the alloy), a cobalt-iron core (using 90% cobalt in the alloy), and the cobalt-iron-boron core of the present invention (also using 90% cobalt in the alloy).

**Table 2**

| Core | Saturation Material Magnetization 4πMs | Hc | Hk | µ |
|---|---|---|---|---|
| 82NiFe | 10 KGauss | ∼0.2 Oe | ∼2.5 Oe | ∼4000 |
| 90CoFe | 19 KGauss | ∼3.0 Oe | ∼13 Oe | ∼1500 |
| 90CoFeB | 19 KGauss | ∼1.0 Oe | ∼7 Oe | ∼2500 |

Table 2 shows that H_{c} and Hₖ are reduced for the CoFeB core of the present invention while the value of the permeability µ is greatly increased over the cobaltiron core.

Using the cobalt-iron-boron core of the present invention, the thin film magnetic head coercivity H_{c} is reduced over that of a cobalt-iron thin film head as the thickness of the film is increased. Using the cobaltiron-boron thin film magnetic head of the present invention, the head will have a high saturation magnetisation 4πMₛ, low coercivity H_{c}, low anisotropy Hₖ and an increased permeability µ. The thin film magnetic read/write head of the present invention offers improved reading and writing characteristics whereby magnetic storage density may be increased.

Although the present invention has been described with reference to a preferred embodiment, various changes may be made in form and detail without departing from the scope of the invention. For example, different ratios of cobalt, iron and boron may be used in the core and the electro-plating bath.

## Claims

1. A magnetic read/write head comprising a substrate (36, 25), a thin film magnetic core (13) of a metal alloy supported by the substrate and including a read/write gap (24) for reading and writing information, and a coil (18, 34) magnetically coupled to the magnetic core, characterised in that the metal alloy is a cobalt-based alloy comprising 87.63 wt% to 92.9 wt% cobalt; 7.0 wt% to 12.0 wt% iron; and 0.1 wt% to 0.37% wt% boron.

2. A magnetic read/write head as claimed in claim 1, wherein said magnetic core (13) comprises first and second layers (14, 16) of said metal alloy and wherein a layer of insulating material (38) is deposited on said first layer (16) between said first and second layers and said coil (18, 34) is embedded in said layer of insulating material, said read/write gap (24) being formed by facing portions (20, 22) of said first and second layers.

3. A method of forming a magnetic read/write head comprising depositing successive layers (14, 16) of a metal alloy on a substrate (36, 25) to form a thin film magnetic core (13) having a read/write gap (24) and providing a coil (18,34) which is magnetically coupled to the magnetic core, characterised in that the successive layers (14, 16) of the metal alloy deposited on the substrate (36, 25) is a cobalt based alloy comprising: 87.63 wt% to 92.9 wt% cobalt; 7.0 wt% to 12.0 wt% iron and 0.1 wt% to 0.37% boron.

4. The method of claim 3 wherein the successive layers (14, 16) of the metal alloy are deposited on the substrate (36, 25) by electro-deposition.

5. A method according to claim 4 wherein a rotating magnetic field is applied to the layers (14, 16) of magnetic metal alloy during electro-deposition.

6. A method according to claim 3 or 4 wherein the layers (14, 16) of the magnetic metal alloy are annealed and a rotating magnetic field is applied during the annealing.

7. A method according to any of claims 3 to 6 comprising depositing insulating material (38) on a portion of a first magnetic layer (16), depositing conductors on said insulating material to form a coil (18, 34), depositing further insulating material on said conductors and depositing a second magnetic layer (14) on said further insulating material, to form said thin film magnetic core (13) having a read/write gap (24) between said first and second magnetic layers.

8. A method according to claim 7 wherein gap material is deposited on a further portion of said first magnetic layer (16) and is sandwiched between the portions (20, 22) of said magnetic layers (14,16) which form said gap.

9. A method according to any of claims 3 to 8 wherein said magnetic layers (14, 16) are electro-deposited by a pulsed current.

10. A method according to any of claims 3 to 9 wherein said magnetic layers are deposited from a bath containing dimethyl amine borane.

## Patentansprüche

1. Lese-/Schreib-Magnetkopf mit einem Substrat (36, 25), mit einem Dünnfilm-Magnetkern (13) aus einer Metallegierung, der von dem Substrat gehaltert ist und einen Lese-/Schreib-Spalt (24) zum Lesen und Schreiben von Informationen einschließt, und mit einer Wicklung (18, 34), die magnetisch mit dem Magnetkern gekoppelt ist,
dadurch gekennzeichnet, daß die Metallegierung eine Legierung auf der Grundlage von Kobalt ist, die 87,63 bis 92,9 Gewichtsprozente Kobalt, 7,0 bis 12,0 Gewichtsprozente Eisen und 0,1 bis 0,37 Gewichtsprozente Bor umfaßt.

2. Lese-/Schreib-Magnetkopf nach Anspruch 1, bei dem der Magnetkern (13) erste und zweite Schichten (14, 16) aus der Metallegierung umfaßt, und bei dem eine Schicht aus isolierendem Material (38) auf der ersten Schicht (16) zwischen den ersten und zweiten Schichten abgeschieden ist und die Wicklung (18, 34) in die Schicht aus isolierendem Material eingebettet ist, wobei der Lese-/Schreib-Spalt (24) durch aufeinandergerichtete Teile (20, 22) der ersten und zweiten Schichten gebildet ist.

3. Verfahren zur Herstellung eines Lese-/Schreib-Magnetkopfes, das die Abscheidung aufeinanderfolgenden Schichten (14, 16) einer Metallegierung auf einem Substrat (36, 25) zur Bildung eines Dünnfilm-Magnetkerns (13) mit einem Lese-/Schreibkopf (24) und die Schaffung einer Wicklung (18, 34) umfaßt, die magnetisch mit dem Magnetkern gekoppelt ist,
dadurch gekennzeichnet, daß die aufeinanderfolgenden Schichten (14, 16) der Metallegierung, die auf dem Substrat (36, 25) abgeschieden werden, eine Legierung auf der Grundlage von Kobalt sind, die 87,63 bis 92,9 Gewichtsprozente Kobalt, 7,0 bis 12,0 Gewichtsprozente Eisen und 0,1 bis 0,37 Gewichtsprozente Bor umfaßt.

4. Verfahren nach Anspruch 3, bei dem die aufeinanderfolgenden Schichten (14, 16) der Metallegierung auf dem Substrat (36, 25) durch Elektroabscheidung abgeschieden werden.

5. Verfahren nach Anspruch 4, bei dem ein rotierendes Magnetfeld an die Schichten (14, 16) der magnetischen Metallegierung während der Elektroabscheidung angelegt wird.

6. Verfahren nach Anspruch 3 oder 4, bei dem die Schichten (14, 16) der magnetischen Metallegierung geglüht werden und ein rotierendes Magnetfeld während des Glühens angelegt wird.

7. Verfahren nach einem der Ansprüche 3 bis 6, das die Abscheidung von Isoliermaterial (38) auf einem Teil einer ersten magnetischen Schicht (16), die Abscheidung von Leitern auf dem Isoliermaterial zur Bildung einer Wicklung (18, 34), die Abscheidung weiteren Isoliermaterials auf den Leitern und die Abscheidung einer zweiten magnetischen Schicht (14) auf dem weiteren Isoliermaterial umfaßt, um den Dünnfilm-Magnetkern (13) mit einem Lese-/Schreib-Spalt (24) zwischen den ersten und zweiten magnetischen Schichten zu bilden.

8. Verfahren nach Anspruch 7, bei dem Spaltmaterial auf einem weiteren Teil der ersten magnetischen Schicht (16) abgeschieden wird und zwischen den Teilen (20, 22) der magnetischen Schichten (14, 16) eingeschichtet ist, die den Spalt bilden.

9. Verfahren nach einem der Ansprüche 3 bis 8, bei dem die magnetischen Schichten (14, 16) durch einen impulsförmigen Strom elektroabgeschieden werden.

10. Verfahren nach einem der Ansprüche 3 bis 9, bei dem die magnetischen Schichten aus einem Bad abgeschieden werden, das Dimethylaminboran enthält.

## Revendications

1. Tête magnétique de lecture/écriture comprenant un substrat (36, 25), un coeur magnétique (13) constitué d'un film mince en un alliage métallique supporté par le substrat et comprenant un entrefer (24) de lecture/écriture destiné à lire et écrire des informations, et une bobine (18, 34) couplée magnétiquement au coeur magnétique, caractérisée en ce que l'alliage métallique est un alliage à base de cobalt comprenant de 87,63 % en poids à 92,9 % en poids de cobalt ; de 7,0 % en poids à 12,0 % en poids de fer ; et de 0,1 % en poids à 0,37 % en poids de bore.

2. Tête magnétique de lecture/écriture selon la revendication 1, dans laquelle ledit coeur magnétique (13) comprend des première et seconde couches (14, 16) dudit alliage métallique et dans laquelle une couche de matériau isolant (38) est déposée sur ladite première couche (16) entre lesdites première et seconde couches et ladite bobine (18, 34) est enchâssée dans ladite couche de matériau isolant, ledit entrefer (24) de lecture/écriture étant formé en mettant face à face des parties (20, 22) desdites première et seconde couches.

3. Procédé de fabrication d'une tête magnétique de lecture/écriture comprenant le dépôt de couches successives (14, 16) d'un alliage métallique sur un substrat (36, 25) pour former un coeur magnétique (13) en film mince ayant un entrefer (24) de lecture/écriture et la prévision d'une bobine (18, 34) qui est magnétiquement couplée au coeur magnétique, caractérisé en ce que les couches successives (14, 16) de l'alliage métallique déposé sur le substrat (36, 25) sont un alliage à base de cobalt comprenant : de 87,63 % en poids à 92,9 % en poids de cobalt ; de 7,0 % en poids à 12,0 % en poids de fer et de 0,1 % en poids à 0,37 % en poids de bore.

4. Procédé selon la revendication 3, dans lequel les couches successives (14, 16) de l'alliage métallique sont déposées sur le substrat (36, 25) par électrodéposition.

5. Procédé selon la revendication 4, dans lequel un champ magnétique rotatif est appliqué aux couches (14, 16) de l'alliage métallique magnétique pendant l'électrodéposition.

6. Procédé selon la revendication 3 ou 4, dans lequel les couches (14, 16) de l'alliage métallique magnétique sont recuites et un champ magnétique rotatif est appliqué pendant le recuit.

7. Procédé selon l'une quelconque des revendications 3 à 6, comprenant le dépôt d'un matériau isolant (38) sur une partie d'une première couche magnétique (16), le dépôt de conducteurs sur ledit matériau isolant pour former une bobine (18, 34), un autre dépôt de matériau isolant sur lesdits conducteurs et le dépôt d'une seconde couche magnétique (14) sur ledit autre matériau isolant, pour former ledit coeur magnétique (13) en film mince ayant un entrefer (24) de lecture/écriture entre lesdites première et seconde couches magnétiques.

8. Procédé selon la revendication 7, dans lequel le matériau de l'entrefer est déposé sur une autre partie de ladite première couche magnétique (16) et est intercalé entre les parties (20, 22) desdites couches magnétiques (14, 16) qui forment ledit entrefer.

9. Procédé selon l'une quelconque des revendications 3 à 8, dans lequel lesdites couches magnétiques (14, 16) sont déposées par électrodéposition par un courant pulsé.

10. Procédé selon l'une quelconque des revendications 3 à 9, dans lequel lesdites couches magnétiques sont déposées à partir d'un bain contenant du borane de diméthylamine.
